(19) Europäisches Patentamt / European Patent Office / Office européen des brevets

(11) **EP 1 561 290 B1**

(12) **FASCICULE DE BREVET EUROPEEN**

(45) Date de publication et mention de la délivrance du brevet:
**20.01.2016 Bulletin 2016/03**

(21) Numéro de dépôt: **02795364.5**

(22) Date de dépôt: **05.11.2002**

(51) Int Cl.:
*H04B 5/00* (2006.01)     *G06K 7/10* (2006.01)
*B60C 23/04* (2006.01)

(86) Numéro de dépôt international:
**PCT/FR2002/003780**

(87) Numéro de publication internationale:
**WO 2003/041295 (15.05.2003 Gazette 2003/20)**

(54) **DISPOSITIF PASSIF D'ACCROISSEMENT DE L'EFFICACITÉ DE TRANSMISSION DE SYSTÈMES RADIOFRÉQUENCE**

PASSIVE VORRICHTUNG ZUR ERHÖHUNG DER ÜBERTRAGUNGSEFFIZIENZ VON FUNKFREQUENZSYSTEMEN

PASSIVE DEVICE FOR INCREASING THE TRANSMISSION EFFECTIVENESS OF RADIO FREQUENCY SYSTEMS

(84) Etats contractants désignés:
**AT BE BG CH CY CZ DE DK EE ES FI FR GB GR IE IT LI LU MC NL PT SE SK TR**

(30) Priorité: **09.11.2001 FR 0114536**

(43) Date de publication de la demande:
**10.08.2005 Bulletin 2005/32**

(73) Titulaire: **Messier-Bugatti-Dowty**
**78140 Vélizy-Villacoublay (FR)**

(72) Inventeurs:
• **LOCATELLI, Marcel**
  **F-38330 Monbonnot (FR)**
• **THOMAS, Thierry**
  **F-38760 Varces Allières et Risset (FR)**

(74) Mandataire: **Parzy, Benjamin Alain**
**Cabinet Boettcher**
**16, rue Médéric**
**75017 Paris (FR)**

(56) Documents cités:
**WO-A-00/26989     DE-A- 19 700 110**
**US-A- 4 642 786     US-A- 5 033 295**

EP 1 561 290 B1

## Description

### Domaine technique

L'invention se situe dans le domaine des dispositifs de transmissions radiofréquence comportant une antenne d'émission et une antenne de réception.

Elle concerne en particulier mais non exclusivement de tels dispositifs pour lesquels la distance entre l'antenne d'émission et l'antenne de réception est courte, par rapport à une longueur d'onde $\lambda$ d'une onde porteuse circulant entre l'antenne d'émission et l'antenne de réception, cette distance étant inférieure ou du même ordre de grandeur que $\lambda/2\pi$.

### Art antérieur.

Il est connu d'utiliser des antennes d'émission et de réception fonctionnant en champ proche ou en champ lointain. Le fonctionnement en champ proche correspond au cas indiqué ci-dessus dans lequel la distance entre antennes est inférieure ou du même ordre de grandeur que $\lambda/2\pi$. Il fait appel au modèle quasi stationnaire. A l'opposé le champ lointain pour lequel la distance entre antenne d'émission et antenne de réception est nettement supérieure à $\lambda/2\pi$ fait appel au régime de propagation.

L'amplitude de l'induction électromagnétique, décroît dans le cas du fonctionnement en champ proche selon une loi en $1/d^n$ et en $1/d$ dans le cas du fonctionnement en champ lointain. d désigne la distance entre antenne d'émission et antenne de réception et l'exposant n est un nombre compris entre 1 et 3 qui dépend de la directivité des antennes et de la distance entre antennes.

Dans le cas du fonctionnement en champ proche, utilisé pour la transmission d'informations mais aussi pour la transmission d'énergie, il s'ensuit que l'efficacité de transmission décroît très rapidement avec la distance. Une solution connue consiste à augmenter la puissance émise pour disposer au niveau de l'antenne réceptrice d'une énergie ou d'un niveau de signal exploitable. D'autres solutions sont présentées dans les documents US 4 642 786 et US 5 033 295.

Les possibilités dans cette voie de l'accroissement de puissance émises sont cependant limitées en raison des normes applicables, en particulier sur des plates-formes telles que des aéronefs sur lesquelles se trouvent un grand nombre d'appareils électroniques sensibles au brouillage par du bruit blanc.

### Brève description de l'invention.

Selon l'invention il est prévu pour accroître l'efficacité de transmission sans augmenter trop la puissance émise de disposer un ou plusieurs circuits résonants sur le trajet direct ou au niveau de parois entre antenne d'émission et antenne de réception.

Ainsi l'invention est relative à un dispositif de transmission radiofréquence selon la revendication 1, et à l'utilisation de ce dispositif selon la revendication 6.

De préférence le circuit résonant passif est accordé sur une fréquence égale ou voisine d'une fréquence circulant entre les antennes d'émission et de réception.

Lorsqu'on dit que le circuit résonant passif est placé entre les antennes d'émission et de réception on veut dire qu'il se situe dans un volume délimité par deux plans parallèles entre eux passant l'un par l'antenne d'émission, l'autre par l'antenne de réception et perpendiculaires à la direction joignant les antennes d'émission et de réception. De préférence et si rien ne gêne le circuit résonant passif, ce dernier sera placé sur le trajet direct entre les antennes d'émission et de réception. Si des parois sont interposées entre les antennes d'émission et de réception, en particulier des parois conductrices de l'électricité constituant un obstacle à la propagation des ondes électromagnétiques le circuit résonant passif sera placé de telle sorte qu'une partie se trouve d'un côté de la paroi et une partie de l'autre côté de la paroi. Si la paroi a des dimensions assez petites délimitant un volume de dimension finie situé entre les antennes d'émission et de réception, le circuit résonant passif pourra être placé de façon à contourner la paroi avec une partie située vers l'antenne d'émission et une partie tournée vers l'antenne de réception. Il est naturellement possible de placer plusieurs circuits résonants passifs entre les antennes d'émission et de réception en particulier au niveau de chaque paroi conductrice de l'électricité qui se trouverait entre les antennes d'émission et de réception.

### Brève description des dessins.

L'invention des exemples de réalisation et d'application de l'invention seront maintenant décrits en regard des dessins annexés dans lesquels

La figure 1 représente schématiquement un dispositif selon l'invention.
La figure 2 représente schématiquement un dispositif selon l'invention dans le cas où une paroi est interposée sur le trajet entre les antennes d'émission et de réception.

La figure 3 comporte une partie A et une partie B. La partie A représente une transmission d'information entre un capteur et des moyens de traitement éloignés réalisée selon l'art antérieur, la partie B représente schématiquement une amélioration de la transmission utilisant l'invention pour la même transmission.

La figure 4 représente une autre utilisation de l'invention pour une transmission entre antennes d'émission et de réception entre lesquelles sont interposées des surfaces conductrices de petite dimension n'enfermant pas l'une des antennes.

La figure 5 schématise l'effet de l'utilisation commentée en liaison avec la figure 4.

Les figures 6 et 7 sont destinées à illustrer les facteurs intervenant dans le calcul du couplage entre antennes d'émission et de réception dans le cas du trajet direct et dans le cas d'une traversée de paroi respectivement.

Dans les figures des numéros de référence identiques sont attribués à des éléments ayant même fonction.

## Description d'exemples de réalisation et d'utilisations.

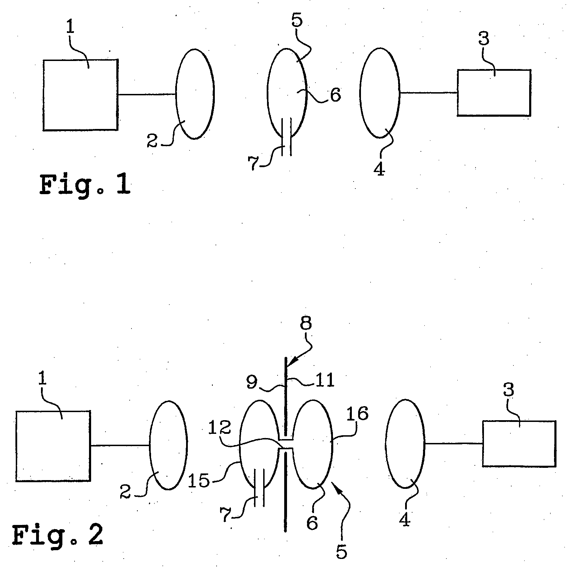

La figure 1 représente schématiquement un dispositif selon l'invention. Le dispositif comporte des circuits émetteur 1 et récepteur 3 en eux-mêmes connus couplés respectivement de façon également connue à une antenne d'émission 2 et à une antenne de réception 4. Selon l'invention un circuit résonant passif 5 est placé entre les antennes d'émission 2 et de réception 3. De tels circuits résonants passifs 5 ainsi que leur mode de fabrication sont en eux-mêmes connus ainsi que leur mode de fabrication. De tels circuits sont utilisés par exemple pour signaler des objets auxquels ils sont attachés lorsque ces objets passent des portillons, par exemple de magasin comportant des moyens d'émission radiofréquence dont la fréquence d'émission est égale à la fréquence de résonance du circuit résonant passif. Sur la figure 1 le circuit résonant passif 5 a été représenté par une boucle inductive 6 couplée à une capacité 7. Comme expliqué en détail en annexe à cette demande, la présence d'un tel circuit résonant passif 5 améliore le couplage entre les antennes d'émission 2 et de réception 4.

Un mode de réalisation particulièrement intéressant de l'invention sera maintenant commenté en liaison avec la figure 2. Ce mode de réalisation concerne le cas où une paroi conductrice 8, est placée entre les antennes d'émission 2 et de réception 4. Cette paroi 8 fait écran à la transmission entre les antennes d'émission et de réception. Selon cette forme de réalisation de l'invention, le circuit résonant passif 5 est placé sur la paroi 8 de telle sorte qu'une partie 15 du circuit résonant passif 5 se trouve sur une première face 9 de la paroi 8, ou du côté de cette face 9, et qu'une seconde partie 16 du circuit résonant passif 5 se trouve sur une seconde face 11 de la paroi 8, ou du côté de cette face 11, les première et seconde parties du circuit résonant passif 5 étant électriquement connectées entre elles par un conducteur 12 traversant la paroi 8.

Le couplage obtenu par une telle liaison au travers d'une paroi conductrice 8 sur laquelle est monté un tel circuit résonant passif 5 est illustré dans une seconde partie de l'annexe à la présente description.

Ainsi selon ce mode de réalisation le circuit résonant passif est physiquement réparti en une première 15 et une seconde 16 partie raccordées l'une à l'autre par des conducteurs 12 de l'électricité passant au travers d'une paroi 8 conductrice de l'électricité, la paroi 8 ayant deux faces 9, 11 une première 9 et une seconde 11, la première partie 15 du circuit résonant passif 5 étant disposée du côté de la première face 9 et la seconde partie 16 du circuit résonant passif 5 étant disposée du côté de la seconde face 11.

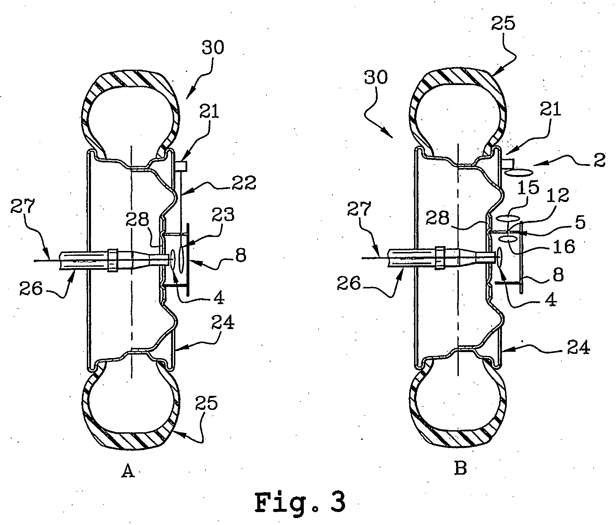

Une application intéressante de ce mode de réalisation sera maintenant commentée en liaison avec la figure 3 qui comporte les parties A et B. La partie A représente une réalisation de l'art antérieur. Un capteur 21 d'une grandeur de fonctionnement d'un appareil 25, transmet des données vers des moyens de traitement non représentés. Le capteur 21 et les moyens de traitement sont séparés notamment par une cloison conductrice 8. Dans le cas représenté en liaison avec la figure 3 partie A et B le capteur est un capteur de pression 21 d'un pneumatique 25. Le pneumatique 25 est monté sur une jante amovible 24 d'une roue 30 ayant un moyeu 28. Le moyeu 28 de la roue 30 tourne autour d'un axe ou d'une fusée fixe 26. La liaison entre le capteur 21 et les moyens de traitement passe par une première liaison filaire 22 traversant un capot tournant 8 protégeant le moyeu 28. Le capteur 21, la jante amovible 24, le moyeu 28, la liaison filaire 22 et le capot tournant 8 tournent avec la roue 30 en sorte que leurs positions relatives restent inchangées au cours de la rotation. A l'intérieur du capot tournant 8 un couplage électromagnétique entre une seconde liaison filaire 27 non tournante, située à l'intérieur de l'axe ou de la fusée 26 est assurée par une antenne tournante 23 connectée à la première liaison filaire 22 et une antenne fixe 4 connectée à la seconde liaison filaire 27.

La liaison 22 par fil entre le capteur et l'antenne tournante est fragile en sorte qu'il en résulte une fragilité de la transmission entre le capteur 21 et les moyens de traitement. De plus lors des démontages pour maintenance ou pour remplacement des pneumatiques, des précautions doivent être prises pour ne pas fragiliser la liaison et pour vérifier qu'après remontage la liaison est assurée. En résumé une telle liaison est peu fiable et complique la maintenance. L'utilisation d'un circuit résonant passif 5 comme décrit ci-dessus en liaison avec la figure 2 permet une liaison sûre. Le montage et le démontage de la jante sont simplifiés car il y indépendance du moyeu par rapport à la jante, aucune liaison filaire n'étant nécessaire entre le capteur et le moyeu.

Le montage utilisant l'invention est représenté en partie B de la figure 3. Une antenne d'émission 2 recevant les données à transmettre est couplée au capteur 21. Un circuit résonant passif 5 est placé sur la paroi 8 formant capot de protection. Le circuit résonant passif est en deux parties 15, 16. Une première partie 15 du circuit résonant passif 5 se trouve à l'extérieur, du capot 8 et une seconde partie 16 du circuit résonant passif 5 se trouve à l'intérieur du capot 8. Les première 15 et seconde 16 parties du circuit résonant passif 5 sont électriquement connectées entre elles par un conducteur 12 isolé traversant le capot 8. Dans le cas traité ci-dessus la roue peut être une roue d'un train d'atterrissage d'un avion ou plus généralement d'une plate-forme sur roue mais l'utilisation de l'invention est avantageuse chaque fois que les antennes d'émission et de réception sont en rotation l'une par rapport à l'autre.

Ainsi de façon générale l'invention concerne l'utilisation d'un dispositif de transmission radiofréquence pour assurer une transmission radiofréquence au travers d'une paroi entre une antenne d'émission et une antenne de réception en mouvement de rotation l'une par rapport à l'autre dans lequel un circuit résonant passif 5 est physiquement réparti en une première 15 et une seconde 16 partie raccordées l'une à l'autre par des conducteurs 12 isolés de l'électricité passant au travers de la paroi 8 conductrice de l'électricité, la paroi 8 ayant deux faces 9, 11 une première 9 et une seconde 11, la première partie 15 du circuit résonant passif 5 étant disposée du côté de la première face 9 et la seconde partie 16 du circuit résonant passif 5 étant disposée du côté de la seconde face 11.

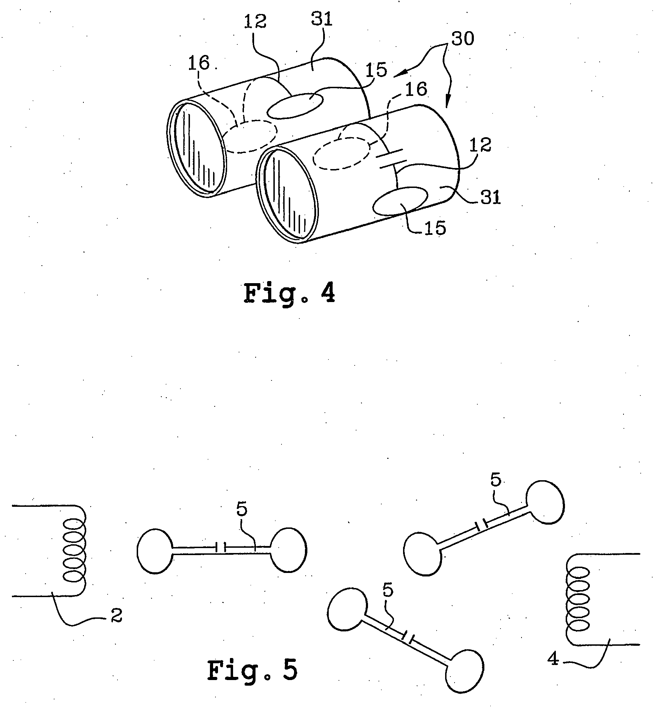

Une seconde utilisation avantageuse de l'invention concerne le cas où la liaison entre les antennes d'émission et de réception est gênée non par une grande paroi 8 placée entre les antennes ou enfermant éventuellement avec d'autres parois l'antenne d'émission ou l'antenne de réception, comme dans les cas commentés ci-dessus, mais par une ou plusieurs surfaces conductrices de dimensions petites ou par des surfaces anguleuses ou courbes. Il pourra s'agir par exemple de cloisons formant une partie d'un dièdre. Un autre exemple d'un tel cas est donné par exemple par une transmission entre une antenne d'émission et une antenne de réception séparées l'une de l'autre par des boîtes de conserves métalliques. Ces boîtes constituent un obstacle à la transmission. Il est naturellement possible d'envisager de munir ces boîtes de deux circuits résonants placés l'un pour assurer une première traversée de cloison de la boîte et l'autre pour assurer une seconde traversée de cloison par exemple diamétralement opposée à la première traversée. Cependant un mode de réalisation du circuit résonant passif placé entre les deux antennes permet de n'avoir qu'un seul circuit par surface courbe. Ce mode de réalisation sera maintenant commenté en liaison avec la figure 4. Cette figure représente deux boîtes de conserve 30 au travers desquelles on sait que l'on devra faire passer une transmission radiofréquence entre deux antennes non représentées. Les volumes intérieurs de ces boîtes sont délimitées par des cloisons 31 constituées par la réunion jointive d'une cloison cylindrique et de deux flasques plats placés perpendiculairement à la cloison cylindrique. La cloison 31 ainsi formée délimite un volume fermé. Dans le cas général la cloison délimite au moins partiellement un volume. Afin de permettre la transmission, un circuit résonant 5 est présent sur chacune des cloisons 31. Les circuits résonants passifs sont conçus en deux parties une première 15 et une seconde 16. Les deux parties sont raccordées entre elles par une liaison conductrice 12. La liaison conductrice 12 ne traverse pas la cloison. Dans le cas ici commenté où les cloisons 31 délimitent partiellement des volumes ou des volumes fermés, la liaison 12 et les deux parties 15, 16 de circuit résonant passif 5 sont entièrement à l'extérieur du volume délimité. Les première et seconde parties seront de préférence disposées l'une par rapport à l'autre sur des parties de la cloison 31 sensiblement opposées l'une à l'autre. Par parties opposées on entend par exemple pour une surface cylindrique des parties qui sont diamétralement opposées l'une à l'autre mais pas nécessairement au même niveau par rapport à une base. Les flasques plats des boîtes 30 constituent aussi des parties opposées. D'une façon générale deux points de cloisons fermées seront dit opposés s'ils peuvent être joints, par une droite passant par une partie centrale d'un volume délimité par la cloison. Lorsque la cloison n'est par fermée deux points de la cloison seront dits opposés s'il peuvent être joints par une droite passant à l'intérieur du volume délimité partiellement par la cloison. Dans un tel cas la face extérieure de la cloison sera la face de la cloison qui ne contient pas le segment de droite joignant les deux points de la cloison. Ainsi par exemple dans le cas d'une cloison continue délimitée par deux parties de plan sécants, une droite sécante aux deux parties de plan en un point de chaque plan contient un segment de droite délimité par les deux points d'intersection. Ce segment est entièrement à l'intérieur d'un volume délimité partiellement par la même face de la cloison. Cette face est dîtes intérieure. L'autre face est dite extérieure.

En résumé dans ce mode de réalisation les antennes d'émission et de réception sont séparées par une ou plusieurs cloisons conductrices ayant une face extérieure et une face intérieure délimitant au moins partiellement un volume. Un ou plusieurs circuits résonants passifs sont physiquement répartis en une première et une seconde parties raccordées l'une à l'autre par des conducteurs de l'électricité, les première et seconde parties et le raccord conducteur les joignant, de chaque circuit résonant passif en deux parties, sont situés entièrement sur la face extérieure de une ou plusieurs desdites cloisons placées entre les antennes d'émission et de réception. Les première et seconde parties sont sur des zones opposées desdites faces extérieures desdites cloisons.

Le résultat est symbolisé par la figure 5. Du fait de la position opposée des deux parties du circuit résonant passif 5, et quelque soit la position des cloisons il existe avec une quasi certitude toujours un couplage entre les antennes 2 d'émission et 4 de réception.

**ANNEXE**

**Concept du couplage par circuit résonnant**

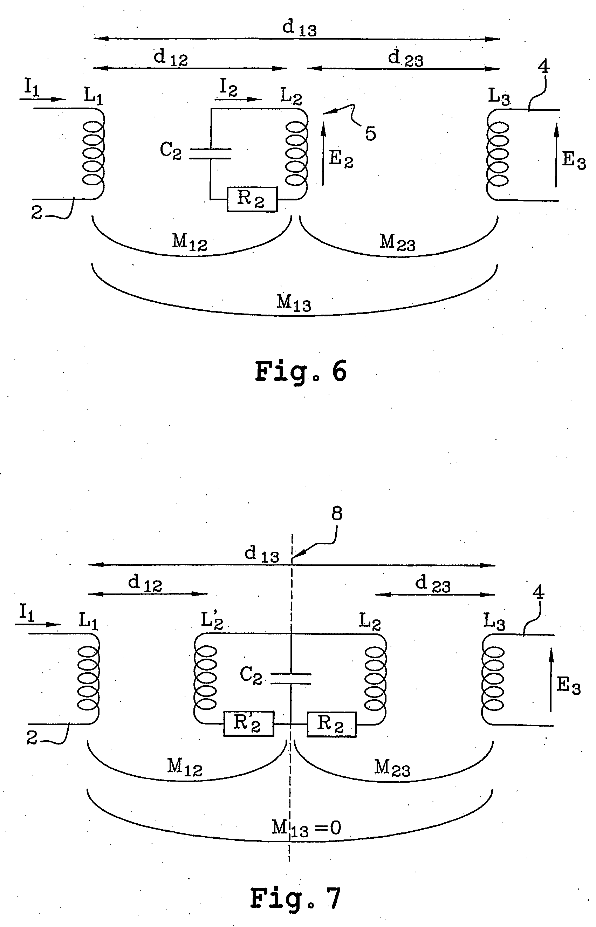

Soit le circuit de base représenté sur les figures 6 et 7. Ces circuits comportent une antenne d'émission 2, couplée magnétiquement à une antenne de réception 4. Ces antennes sont représentées schématiquement sous forme de bobines d'induction $L_1$ et $L_3$ respectivement. Un circuit résonnant 5 sous forme d'un circuit série formé d'un inductance $L_2$ d'une résistance $R_2$ et d'une capacité $C_2$ est situé entre les deux antennes. Sur la figure 7 ce circuit 5 est en deux parties situées de part et d'autre d'une paroi 8, traversée par exemple de façon étanche par le circuit 5. L'inductance du circuit 5 est la somme de deux inductances $L_2$ et $L_2'$ situées de part et d'autre de la cloison 8. Dans ce qui suit une distance entre deux antennes par exemple les inductances $L_1$ et $L_3$ est indiquée par $d_{13}$ ou plus généralement entre une inductance i et une inductance j par $d_{ij}$. Il en va de même pour un couplage k ou une mutuelle de couplage entre une inductance i et une inductance j.

Avec l'hypothèse que le couplage $k_{ij}$ entre une antenne i et une antenne j dépend de la distance dij entre les antennes i et j suivant la relation :

$$k_{ij} = a / d_{ij}^{n} \qquad (1)$$

où a est une constante et où n est compris entre 1 et 3.

Avec la mutuelle $M_{ij}$ de couplage entre inductance $L_i$ et $L_j$ des antennes i et j :

$$M_{ij} = k_{ij}(L_i L_j)^{1/2} \qquad (2)$$

Dans le cas du circuit intermédiaire 5 résonnant, $L_2 C_2 \omega^2 = 1$, avec $\omega = 2\pi f$, f étant la fréquence du signal émis par l'antenne 2 $L_1$, de facteur de surtension $Q = L_2\omega/R_2$ ; l'adjonction de ce circuit se traduit par un gain G au niveau de la force électromotrice induite $E_3$ dans l'antenne de réception $L_3$.

$$G = 1 - jQ(k_{12}k_{23}/k_{13})$$

avec $j = (-1)^{1/2}$.

Avec l'hypothèse simplificatrice $d_{12} = d_{23} = d_{13}/2 = d/2$ exprimant que le circuit 5 est situé à mi distance des antennes, et module de G>>1

$$G = k_{13} \ Q \ 4^{n}$$

**Exemple numérique**

$$k_{13} = 0,05$$

$$Q = 15$$

$$n = 2$$

$$G = 12$$

**Version avec passage de paroi métallique 8, représenté sur la figure 7**

Dans ce cas le couplage direct est nul : $k_{13} = 0$. Le circuit relais est constitué de deux inductances couplées avec une capacité $C_2$.

La condition de résonance s'exprime par la relation :

$$C_2 \omega^2 \left( L'_2 L_2 / (L'_2 + L_2) \right) = 1$$

Avec l'hypothèse simplificatrice selon laquelle les inductances $L_2$ et $L_2'$ sont identiques : $L_2 = L'_2$ et $R_2 = R'_2$.

Le facteur de surtension :

$$Q = L_2 \omega / R_2 = 2 / R_2 C_2 \omega$$

Avec les mêmes hypothèses que précédemment, relatives aux distances, l'efficacité E (dans ce cas on ne parle pas de gain puisque le couplage direct est nul), correspond au rapport entre le couplage à travers la paroi via le circuit résonant et un système de référence à couplage direct sans paroi de facteur $k_{13}$.

$$E = 2/Q \left( k_{12} k_{23} / k_{13} \right)$$

L'efficacité est moitié du gain du système sans paroi avec circuit résonant de couplage. Avec l'hypothèse que le couplage entre les antennes dépend de la distance suivant la relation :

$$k_{ij} = a / d_{ij}{}^n$$

où n est compris entre 1 et 3.

La mutuelle de couplage :

$$M_{ij} = k_{ij} \left( L_i L_j \right)^{1/2}$$

Avec l'hypothèse simplificatrice

$$d_{12} = d_{23} = d_{13}/2 = d/2$$

$$E = k_{13} 4^n \ Q/2$$

**Exemple numérique**

$$k_{13} \ = \ 0,05$$

$$Q \ = \ 15$$

$$n \ = \ 2.$$

**Revendications**

1. Dispositif de transmission radiofréquence comportant une antenne d'émission (2), une antenne de réception (4) et un ou plusieurs circuits (5) résonants passifs placés entre les antennes d'émission et de réception (2,4), **caractérisé en ce que** au moins un desdits circuits (5) résonants passifs est physiquement réparti en une première et une seconde parties (15,16) raccordées l'une à l'autre par des conducteurs (12) de l'électricité passant au travers d'une paroi (8), la paroi (8) ayant deux faces (9,11) une première et une seconde, la première partie (15) du circuit (5) résonant passif étant disposée du côté de la première face (9) et la seconde partie (16) du circuit (5) résonant passif étant disposée du côté de la seconde face (11).

2. Dispositif de transmission radiofréquence selon la revendication 1, dans lequel chaque circuit (5) résonant passif est accordé sur une fréquence qui est égale ou voisine d'une fréquence d'émission de l'antenne d'émission (2).

3. Dispositif de transmission selon l'une quelconque des revendications précédentes, dans lequel le circuit résonant passif comporte une boucle inductive (6) et une capacité (7), ladite boucle inductive étant couplée à cette capacité (7).

4. Dispositif de transmission selon l'une quelconque des revendications 1 ou 2, dans lequel le circuit résonnant passif comprend une capacité (7), la première partie (15) du circuit (5) résonant passif comprenant une boucle inductive (6, L2) et la seconde partie (16) du circuit (5) résonant passif comprenant une autre boucle inductive (L2') et ces boucles inductives étant couplées à la capacité (7).

5. Dispositif de transmission selon l'une quelconque des revendications précédentes, dans lequel ladite paroi (8) est conductrice de l'électricité.

6. Utilisation d'un dispositif de transmission radiofréquence selon l'une quelconque des revendications 1 à 4 pour assurer une transmission radiofréquence au travers de la paroi (8) entre une antenne d'émission et une antenne de réception en mouvement de rotation l'une par rapport à l'autre.

**Patentansprüche**

1. Funkfrequenzübertragungsvorrichtung, umfassend eine Sendeantenne (2), eine Empfangsantenne (4) und einen oder mehr passive Resonanzkreise (5), die zwischen der Sende- und der Empfangsantenne (2, 4) angeordnet sind, **dadurch gekennzeichnet, dass** mindestens einer der genannten passiven Resonanzkreise (5) physisch in einen ersten und einen zweiten Teil (15, 16) aufgeteilt ist, die über Elektrizitätsleiter (12), die durch eine Wand (8) hindurchgehen, verbunden sind, wobei die Wand (8) zwei Seiten (9, 11) hat, eine erste und eine zweite, wobei der erste Teil (15) des passiven Resonanzkreises (5) auf der Seite der ersten Seite (9) und der zweite Teil (16) des passiven Resonanzkreises (5) auf der Seite der zweiten Seite (11) angeordnet ist.

2. Funkfrequenzübertragungsvorrichtung nach Anspruch 1, wobei jeder passive Resonanzkreis (5) auf eine Frequenz abgestimmt ist, die gleich oder nahe einer Sendefrequenz der Sendeantenne (2) ist.

3. Übertragungsvorrichtung nach einem der vorhergehenden Ansprüche, wobei der passive Resonanzkreis eine Induktionsschleife (6) und eine Kapazität (7) umfasst, wobei die genannte Induktionsschleife an diese Kapazität (7) gekoppelt ist.

4. Übertragungsvorrichtung nach einem der Ansprüche 1 oder 2, wobei der passive Resonanzkreis eine Kapazität (7) umfasst, wobei der erste Teil (15) des passiven Resonanzkreises (5) eine Induktionsschleife (6, L2) und der zweite Teil (16) des passiven Resonanzkreises (5) eine weitere Induktionsschleife (L2') umfasst und diese Induktionsschleifen an die Kapazität (7) gekoppelt sind.

5. Übertragungsvorrichtung nach einem der vorhergehenden Ansprüche, wobei die genannte Wand (8) Elektrizität leitet.

6. Verwendung einer Funkfrequenzübertragungsvorrichtung nach einem der Ansprüche 1 bis 4, um eine Funkfrequenzübertragung durch die Wand (8) zwischen einer Sendeantenne und einer Empfangsantenne bei einer Drehbewegung der einen relativ zur anderen sicherzustellen.

**EP 1 561 290 B1**

**Claims**

1. Radio-frequency transmission device comprising a transmission antenna (2) and a receiving antenna (4) and one or more passive resonant circuits (5) positioned between the transmission and receiving antennas (2, 4), **characterized in that in that** at least one of said passive resonant circuits (5) is physically divided into a first and a second parts (15, 16) connected to one another by electrical conductors (12) traversing a wall (8), the wall (8) comprising two faces (9, 11), a first and a second, the first part (15) of the passive resonant circuit (5) being located on the side of the first face (9) and the second part (16) of passive resonant circuit (5) being located on the side of the second face (11).

2. Radio-frequency transmission device of claim 1, wherein each passive resonant circuit (5) is tuned to a frequency that is equal or close to a transmission frequency of the transmission antenna (2).

3. Radio-frequency transmission device according to any one of the preceding claims, wherein the passive resonant circuit comprises an inductive loop (6) and a capacity (7), said inductive loop being coupled to the capacity (7).

4. Radio-frequency transmission device according to any one of claims 1 or 2, wherein the passive resonant circuit comprises a capacity (7), the first part (15) of the passive resonant circuit (5) comprising an inductive coil (6, L2) and the second part (16) of said passive resonant circuit (5) comprising another inductive coil (L2') and these inductive coils being coupled to said capacity (7).

5. Radio-frequency transmission device according to any one of the preceding claims, wherein said wall (8) is electrically conductive.

6. Use of a radio-frequency transmission device according to any one of claims 1 to 4, to make a radio-frequency transmission through a wall (8) between a transmission antenna and a receiving antenna which rotate with respect to one another.

8

Fig. 1

Fig. 2

Fig. 3

Fig. 4

Fig. 5

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4642786 A

- US 5033295 A